# EUROPEAN PATENT SPECIFICATION

(11) **EP 0 457 356 B1**
(45) Date of publication and mention of the grant of the patent: **13.09.1995**
(21) Application number: 91108096.8
(22) Date of filing: 17.05.1991
(51) Int. Cl.: C08F 2/20

(54) **Process for preparing acrylic polymers in suspension**
Verfahren zur Herstellung von Acrylpolymere in Suspension
Procédé de préparation de polymères acryliques en suspension

(30) Priority: 18.05.1990 IT 2037990
(43) Date of publication of application: 21.11.1991
(73) Proprietor: ELF ATOCHEM ITALIA S.r.l., 20159 Milano (IT)
(72) Inventor: Relvini, Pasquale, Dr., I-20026 Novate Milanese, Milano (IT); Anfossi, Nicola, I-21052 Busto Arsizio, Varese (IT)
(74) Representative: Barz, Peter, Dr.

(56) References cited:
- FR-A- 2 323 701
- CHEMICAL ABSTRACTS, vol. 82, no. 16, 21st April 1975, page 32, abstract no. 98800b, Columbus, Ohio, US; & JP-A-74 88 989

## Description

The present invention relates to a process for preparing acrylic polymers in suspension.

The term "acrylic polymers", whenever used in the present specification, denotes homopolymers and copolymers of the alkyl esters of acrylic and methacrylic acid, wherein the alkyl group contains from 1 to 8, preferably 1 to 4, carbon atoms.

Preferred examples of said acrylic monomers are methyl acrylate, ethyl acrylate, propyl acrylate, isopropyl acrylate, butyl acrylate, methyl methacrylate, ethyl methacrylate, isopropyl methacrylate, sec.butyl methacrylate and tert-butyl methacrylate.

The acrylic polymers can also contain up to 50% by weight of units derived from one or more other unsaturated monomers such as styrene, alpha-methylstyrene, acrylonitrile, (meth)acrylamide, (preferably C₁-C₈) n-alkyl maleimides or (preferably C₆-C₁₄) aryl maleimides, or from poly-unsaturated monomers such as dienes, for example butadiene.

The suspension polymerization is a kind of reaction which occurs in a system in which the monomer is suspended in the form of droplets in a continuous phase and is polymerized by using an initiator of the radical type which is soluble in the monomer. Generally, the continuous phase is water.

The final product is a suspension of polymer particles (beads) having a diameter of about 0.1 to 1 mm, which are easily separable from water by means of centrifugation.

Generally, the ratio of continuous phase (water) to discontinuous phase (monomer) ranges from 1:1 to 3:1.

In the practice of suspension polymerization processes it is necessary to use suspension stabilizers which prevent the coalescence of the monomer droplets in the more advanced polymerization steps.

The suspension stabilizers utilized in the most common technique are water-soluble macromolecular compounds having affinity for the monomer which, placing themselves at the interface between organic phase and aqueous phase, form a protective film which prevents the particles from caking.

On conclusion of the polymerization the suspending agent is removed from the surfaces of the polymer particles by washing with water.

The suspending agent is a key-factor as its characteristics determine the performance of the whole process as regards both the quality of the final polymer and the costs.

There has now been found a process for preparing acrylic polymers in suspension which utilizes, as suspending agent, a polymeric product which imparts high stability to the suspension, permits to obtain beads showing a regular morphology and being free of agglomerates, even when operating with water/monomer ratios very close to unity, reduces the fouling of the polymerization reactor, lowers the concentration of emulsified polymer in the waste waters to extremely low values and, in the case of polymethyl methacrylate (PMMA), imparts a high optical purity to the product.

Thus, the present invention provides a process for preparing acrylic polymers by aqueous suspension polymerization of one or more acrylic monomers, which polymerization is conducted in the presence of a stabilizer comprising 0.05 to 1% by weight, preferably 0.1 to 0.5%. by weight, calculated on the suspension, of a polymer obtained by polymerization of:
(a) 60 to 100% by weight of a salt of at least one sulpho(meth)acrylamide having general formula (I): 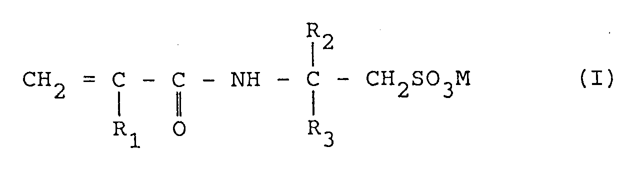 wherein R₁ represents hydrogen or methyl, R₂ and R₃, the same or different from each other, represent hydrogen or C₁-C₄ alkyl (e.g. methyl or ethyl) and M represents an alkali metal or an alkaline earth metal such as, for example, sodium, potassium, calcium and magnesium (in the case of alkaline earth metals M apparently stands for M_{½})
(b) 0 to 40% by weight of at least one acrylic monomer; and in the absence of 0.05 to 10 parts by weight of an electrolyte having a monovalent cation per 100 parts of monomers to be polymerized.

More in particular, the stabilizer used according to the invention comprises a polymer preferably prepared by polymerization of:
(a) 70 to 90% by weight of monomer (I); and
(b) 10 to 30% by weight of acrylic monomer(s).

The proviso regarding the absence of electrolyte having a monovalent cation in the present process is due to the fact that JP-A-49-88989 discloses a process for the suspension polymerization of vinyl or vinylidene monomers carried out in the presence of dispersing agents comprising:
a) 0.008 - 5 parts by weight on 100 parts of monomers of a copolymer containing:
   40% by weight or more of a (meth)acrylic acid derivative of formula: 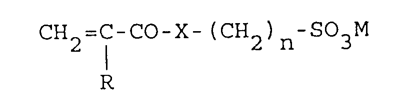 (wherein R = H, CH₃; X = -O-, -NH- or -N(CH₃)-; M = H, Li, Na, K or NH₄; n = 2, 3 or 4) and 60% by weight or less of another vinyl or vinylidene monomer, and
b) 0.05 - 10 parts by weight per 100 parts of the monomers of an electrolyte having a monovalent cation, such as, for example, sodium or potassium chloride.

The compounds of general formula (I) may be obtained by salification, for example with hydroxides of alkali of alkaline earth metals, of the corresponding sulphonic acids available on the market or easily preparable according to simple techniques of organic chemistry. Specific examples of compounds of general formula (I) are sodium 2-acrylamido-2-methylpropane sulphonate, sodium 2-methacrylamido-2-methylpropane sulphonate, sodium 2-acrylamidopropane sulphonate and sodium 2-acrylamido-2-ethane sulphonate.

Examples of acrylic monomers which are utilizable in combination with the salt(s) of general formula (I) are (meth)acrylamide, alkali salts (for example sodium or potassium salts) or alkaline earth salts (for example calcium or magnesium salts) of (meth)acrylic acid, esters of (meth)acrylic acid with an alkyl or isoalkyl C₁-C₄ alcohol (e.g. methanol, ethanol and propanol) and acrylonitrile.

The stabilizers used in the process of the present invention can be produced by aqueous solution polymerization using a water-soluble radical initiator, for example potassium persulphate, optionally in the presence of a reducing agent.

The products so obtained, dissolved in water at 5% by weight, generally provide solutions exhibiting a Brookfield viscosity ranging from 0.5 to 10 Pa.s, preferably 2 to 6 Pa.s, at 25°C.

As regards the polymerization of the acrylic monomer(s), it may be conducted using process conditions well known to those skilled in the art, and in the presence of initiators which, depending on the temperature (usually 60 to 90°C), decompose to form radicals.

Examples of suitable initiators are peroxides such as tert-butylperoxy-2-ethylhexanoate, dibenzoyl peroxide, dilauroyl peroxide and tert-butylperoxydiethyl acetate, or unstable azo-compounds such as azodiisobutyronitrile.

Usually molecular weight modifiers (chain transfer agents) are also employed in the process of the present invention. These may be selected, e.g., from thiols and dithiols such as n-butane-thiol, n-dodecyl-mercaptane, tert-dodecyl mercaptane, cyclohexyl mercaptane, n-octyl mercaptane and 2-ethylhexyl-2-mercaptopropionate.

When the obtained polymer is PMMA or a methyl methacrylate copolymer containing, for example, up to 25% by weight of one or more other acrylic components, the product usually has the following optical properties:
Transmittance (ASTM D 1003-61): higher than 92% on 3 mm thick specimens;
Haze (ASTM D 1003-61): lower than 1.5% on 3 mm thick specimens;
Yellowing index (ASTM D 1925-70): lower than 2.5 on 60 mm thick specimens;
these being typical characteristics of an excellent commercial product.

A few illustrative but not limitative examples are given hereinafter for a better understanding of the present invention.

### Example 1

120 parts of an aqueous NaOH solution at 40% by weight and 630 parts of deionized water were charged into a reactor. 250 parts of 2-acrylamido-2-methylpropane sulphonic acid (AMPS) were gradually fed, whereafter the pH was adjusted within the range of from 7 to 8 by adding small amounts of soda or of AMPS. After having blown a nitrogen stream into the solution to remove oxygen and after heating to 50°C, potassium persulphate (0.075 parts) and sodium metabisulphite (0.025 parts) were added. The polymerization was completed in about 60 minutes. Then the reaction mixture was diluted with 4000 parts of deionized water, thereby obtaining a solution with a solids content of 5.5% and a Brookfield viscosity of 4 Pa.s (measured at 25°C).

### Example 2

150 parts of an aqueous NaOH solution at 40% by weight and 596 parts of deionized water were charged into a reactor. 50 parts of methacrylic acid and 200 parts of AMPS were gradually introduced under stirring. The pH was adjusted at 7-8 by addition of small amounts of soda or AMPS. After having blown a nitrogen stream into the solution, the reactor jacket was heated up to 60°C and after the internal temperature had stabilized, 0.04 parts of potassium persulphate were introduced. The polymerization was completed in about 2 hours. Then the reaction mixture was diluted with 4000 parts of deionized water, thereby obtaining a solution with a solids content of 5.7% and a Brookfield viscosity of 5 Pa.s (measured at 25°C).

### Example 3

97 parts of an aqueous NaOH solution at 40% by weight and 603 parts of deionized water were charged into a reactor. 200 parts of AMPS were gradually fed under stirring and the pH was adjusted at 7-8 by addition of small amounts of soda or AMPS. 100 parts of an aqueous solution of acrylamide at 50% by weight were added and oxygen was removed from the obtained solution with nitrogen. Then the reactor jacket was heated up to 50°C and after the internal temperature had stabilized, 0.025 parts of sodium metabisulphite and 0.075 parts of potassium persulphate were added. The polymerization was completed in about 1 hour. Then the reaction mixture was diluted with 4000 parts of deionized water, thereby obtaining a solution with a solids content of 5.4% and a Brookfield viscosity of 4 Pa.s (measured at 25°C).

### Example 4

The suspension polymerization of methyl methacrylate and of ethyl acrylate was carried out using, as suspending agent, the homopolymer of the sodium salt of 2-acrylamido-2-methylpropane sulphonic acid obtained in example 1.

Into a jacketed, stirred and pressure-resistant reactor there were charged 150 parts of deionized water and 6 parts of the solution obtained in example 1, corresponding to 0.33 parts of dry product. Oxygen was removed by means of a nitrogen stream and the solution was heated to 80°C. Then there were fed 100 parts of a deoxygenated mixture consisting of 96 parts of methyl methacrylate, 4 parts of ethyl acrylate, 0.25 parts of tert-butylperoxy-2-ethyl hexanoate and 0.12 parts of n-butane thiol.

The reactor was pressurized to 100 kPa, the reactor was hermetically closed and the mixture was gradually heated up to 110°C over 120 minutes under continuous stirring. The reactor was maintained at 110°C for 15 minutes, whereafter it was cooled again.

The polymer, in the form of beads having an average diameter of about 0.2 mm, was separated from the mother liquors by filtration, washed with deionized water and oven-dried at 80°C.

The reactor walls, after washing with a water jet, appeared clean and the agglomerates were present in an amount lower than 0.1% by weight calculated on the recovered polymer.

The amount of polymer contained in the mother liquors in the form of emulsified particles was 0.3% by weight.

The obtained polymer exhibited the typical characteristics of a high-quality extruded polymethyl methacrylate:

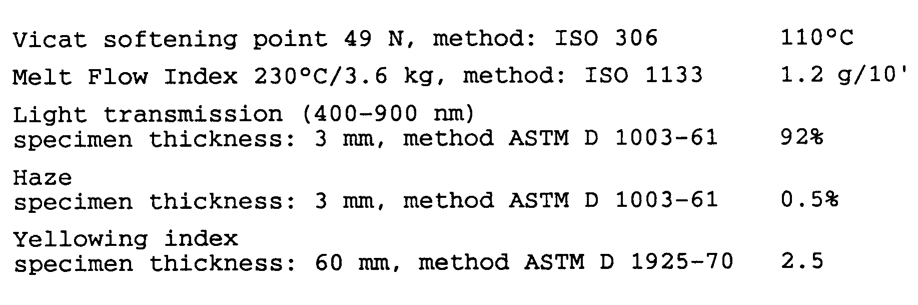

The beads, when formed into a flat plate, afforded an article having excellent aesthetical characteristics, free of surface defects.

### Example 5

Following the general procedure of example 4, a copolymer of methyl methacrylate and ethyl acrylate was prepared. The copolymer of sodium-2-acrylamido-2-methylpropane sulphonate/sodium methacrylate (80/20 by weight) obtained in example 2 was utilized as suspending agent. 200 parts of deionized water and 8 parts of the solution obtained in example 2, corresponding to 0.46 parts of solid product, were charged into the reactor. The solution was heated to 80°C and a mixture was fed, which was composed of 88 parts of methyl methacrylate, 12 parts of methyl acrylate, 0.2 parts of tert-butylperoxydiethylacetate and 0.45 parts of 2-ethylhexyl-3-mercapto-propionate. The polymerization was conducted according to the modalities of example 4. Colorless and transparent beads having an average diameter of about 0.2 mm were obtained at the end of the polymerization.

The reactor walls, after washing with a water jet, were clean and free of agglomerates.

The amount of polymer contained in the mother liquors in the form of an emulsion was equal to 0.5% by weight.

A high quality polymer suitable for injection molding was obtained:

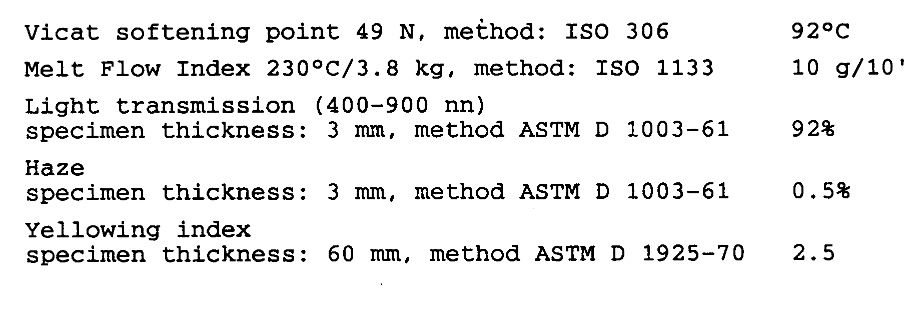

### Example 6

A copolymer of methyl methacrylate with styrene was prepared by using, as suspending agent, the copolymer of sodium 2-acrylamido-3-methylpropane sulphonate/acrylamide (80/20 by weight) obtained in example 3. The general procedure described in example 4 was followed.

The reactor was charged with 150 parts of deionized water and 6 parts of the solution obtained in example 3, corresponding to 0.32 parts of dry product. The solution was heated to 70°C and a mixture was fed, which was composed of 60 parts of methyl methacrylate, 40 parts of styrene, 1 part of dilauryl peroxide and 0.12 parts of di-tert-dodecane thiol. After pressurization to 100 kPa with nitrogen, the reactor was hermetically closed. The polymerization was conducted at 70°C for 5 hours, whereafter the reaction mxiture was heated to 100°C over 1 hour. The reaction was completed by maintaining this temperature for a further 2 hours.

Beads having an average size of about 0.3 mm were thus obtained.

After washing with a water jet, the reactor walls were clean and no agglomerates were present in the polymer.

The polymer fraction contained in the form of an emulsion in the mother liquors was equal to 0.8% by weight.

The resulting polymer was of high quality and exhibited characteristics suitable for injection molding:

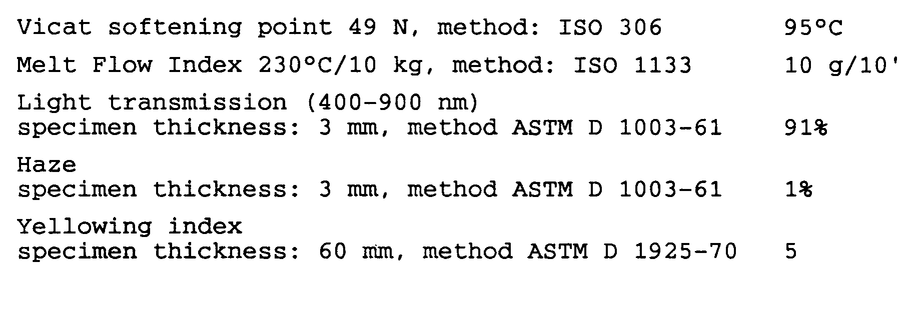

## Claims

1. Process for preparing homo- and copolymers of C₁₋₈ alkylesters of (meth)acrylic acid by aqueous-suspension polymerization of the corresponding monomers, wherein said polymerization is carried out in the presence of a stabilizer comprising 0.05 to 1% by weight, calculated on the suspension, of a polymer prepared by polymerizing
(a) 60 to 100% by weight of a salt of at least one sulpho(meth)acrylamide of general formula (I): 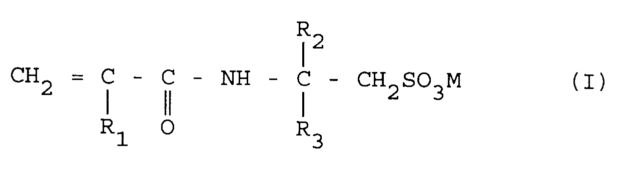 wherein R₁ represents hydrogen or methyl, R₂ and R₃, the same or different from each other, represent hydrogen or C₁-C₄ alkyl and M is an alkali metal or an alkaline earth metal; and
(b) 0 to 40% by weight of at least one acrylic monomer;
and in the absence of 0.05 to 10 parts by weight of an electrolyte having a monovalent cation per 100 parts of monomers to be polymerized.

2. Process according to claim 1, wherein the stabilizer comprises a polymer obtained by polymerizing
(a) 70 to 90% by weight of monomer of formula (I); and
(b) 10 to 30% by weight of acrylic monomer.

3. Process according to any one of claims 1 and 2, wherein the polymeric stabilizer, dissolved in water at 5% by weight, provides solutions having a Brookfield viscosity ranging from 0.5 to 10 Pa.s at 25°C.

4. Process according to any one of claims 1 to 3, wherein the monomers to be polymerized are selected from C₁-C₄ alkyl esters of (meth)acrylic acid.

5. Process according to any one of claims 1 to 4 wherein the monomers to be polymerized comprise methyl methacrylate.

6. Process according to any one of claims 1 to 5, wherein the compounds of general formula (I) are selected from the sodium salts of 2-(meth)acrylamido-2-methylpropane sulphonic acid, 2-acrylamidopropane sulphonic acid and 2-acrylamido-2-ethane-sulphonic acid.

7. Process according to any one of claims 1 to 6, wherein the acrylic monomers to be copolymerized with the compounds of general formula (I) are selected from (meth)acrylamide, alkali and alkaline earth metal salts of (meth)acrylic acid, C₁-C₄ alkyl esters of (meth)acrylic acid and (meth)acrylonitrile.

8. Process according to any one of claims 1 to 7, wherein the monomers to be polymerized are employed in combination with up to 50% by weight, based on the monomer mixture, of other mono- and/or polyunsaturated, copolymerizable monomers.

9. Use of a polymer obtained by polymerization of:
(a) 60 to 100% by weight, preferably 70 to 90% by weight, of at least one monomer of formula (I) given in claim 1; and
(b) 0 to 40% by weight, preferably 10 to 30% by weight, of at least one acrylic monomer;
as stabilizer for the aqueous-suspension polymerization of homo- and copolymers of C₁₋₈ alkylesters of (meth)acrylic acid, provided that it is not used in combination with an electrolyte having a monovalent cation.

## Patentansprüche

1. Verfahren zur Herstellung von Homo- und Copolymeren von C₁₋₈-Alkylestern von (Meth)acrylsäure durch wäßrige Suspensionspolymerisation der entsprechenden Monomeren, in welchem die Polymerisation in Anwesenheit eines Stabilisators durchgeführt wird, der, berechnet auf Basis der Suspension, 0,05 bis 1 Gewichts-% eines Polymeren umfaßt, das hergestellt ist durch Polymerisation von
(a) 60 bis 100 Gewichts-% eines Salzes mindestens eines Sulfo(meth)acrylamids der allgemeinen Formel (I): 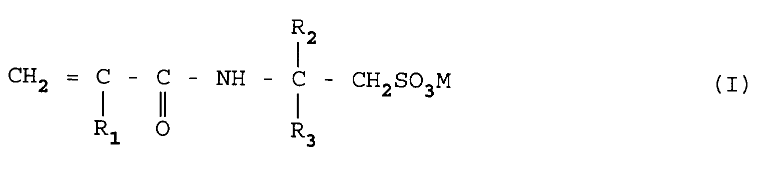 worin R₁ für Wasserstoff oder Methyl steht, R₂ und R₃, gleich oder verschieden voneinander, Wasserstoff oder C₁-C₄-Alkyl bedeuten und M ein Alkalimetall oder ein Erdalkalimetall ist; und
(b) 0 bis 40 Gewichts-% mindestens eines acrylischen Monomeren;
und in Abwesenheit von 0,05 bis 10 Gewichtsteilen eines Elektrolyten mit einem monovalenten Kation pro 100 Teile zu polymerisierende Monomere.

2. Verfahren nach Anspruch 1, in welchem der Stabilisator ein Polymer umfaßt, das erhalten wurde durch Polymerisation von
(a) 70 bis 90 Gewichts-% Monomer der Formel (I); und
(b) 10 bis 30 Gewichts-% acrylischem Monomer.

3. Verfahren nach irgendeinem der Ansprüche 1 und 2, in welchem der polymere Stabilisator, zu 5 Gewichts-% in Wasser gelöst, Lösungen mit einer Brookfield-Viskosität im Bereich von 0,5 bis 10 Pas bei 25°C liefert.

4. Verfahren nach irgendeinem der Ansprüche 1 bis 3, in welchem die zu polymerisierenden Monomeren aus C₁-C₄-Alkylestern von (Meth)acrylsäure ausgewählt werden.

5. Verfahren nach irgendeinem der Ansprüche 1 bis 4, in welchem die zu polymerisierenden Monomeren Methylmethacrylat umfassen.

6. Verfahren nach irgendeinem der Ansprüche 1 bis 5, in welchem die Verbindungen der allgemeinen Formel (I) aus den Natriumsalzen von 2-(Meth)acrylamido-2-methylpropansulfonsäure, 2-Acrylamidopropansulfonsäure und 2-Acrylamido-2-ethansulfonsäure ausgewählt werden.

7. Verfahren nach irgendeinem der Ansprüche 1 bis 6, in welchem die mit den Verbindungen der allgemeinen Formel (I) zu copolymerisierenden acrylischen Monomeren aus (Meth)acrylamid, Alkali- und Erdalkalimetall-Salzen von (Meth)acrylsäure, C₁-C₄-Alkylestern von (Meth)acrylsäure und (Meth)acrylnitril ausgewählt werden.

8. Verfahren nach irgendeinem der Ansprüche 1 bis 7, in welchem die zu polymerisierenden Monomeren in Kombination mit bis zu 50 Gewichts-%, bezogen auf die Monomermischung, anderer einfach und/oder mehrfach ungesättigter copolymerisierbarer Monomerer eingesetzt werden.

9. Verwendung eines Polymeren, das erhalten wurde durch Polymerisation von:
(a) 60 bis 100 Gewichts-%, vorzugsweise 70 bis 90 Gewichts-%, mindestens eines Monomeren der Formel (I), die in Anspruch 1 angegeben ist; und
(b) 0 bis 40 Gewichts-%, vorzugsweise 10 bis 30 Gewichts-%, mindestens eines acrylischen Monomeren;
als Stabilisator für die wäßrige Suspensionspolymerisation von Homo- und Copolymeren von C₁₋₈-Alkylestern von (Meth)acrylsäure, mit der Maßgabe, daß es nicht in Kombination mit einem Elektrolyten mit einem einwertigen Kation eingesetzt wird.

## Revendications

1. Procédé de préparation d'homo- et copolymères d'esters d'alkyle en C₁₋₈ de l'acide (méth)acrylique, par une polymérisation en suspension aqueuse des monomères correspondants, dans lequel ladite polymérisation est effectuée en présence d'un stabilisant comprenant 0,05 à 1% en poids, calculé sur la base de la suspension, d'un polymère préparé par polymérisation de :
(a) 60 à 100% en poids d'un sel d'au moins un sulfo(méth)acrylamide de formule générale (I) : 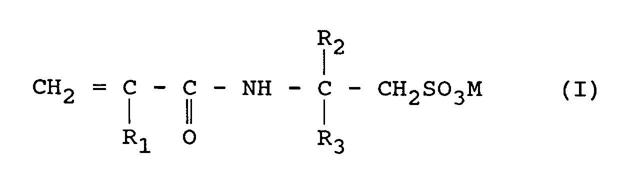 dans laquelle :
- R₁ représente hydrogène ou méthyle ;
- R₂ et R₃, identiques ou différents l'un de l'autre, représentent hydrogène ou alkyle en C₁-C₄ ; et
- M est un métal alcalin ou un métal alcalino-terreux ; et
(b) 0 à 40% en poids d'au moins un monomère acrylique ;
et en l'absence de 0,05 à 10 parties en poids d'un électrolyte ayant un cation monovalent pour 100 parties de monomères devant être polymérisés.

2. Procédé selon la revendication 1, dans lequel le stabilisant comprend un polymère obtenu par polymérisation de :
(a) 70 à 90% en poids de monomère de la formule (I) ; et
(b) 10 à 30% en poids de monomère acrylique.

3. Procédé selon l'une quelconque des revendications 1 et 2, dans lequel le stabilisant polymère, dissous dans l'eau à 5% en poids, fournit des solutions ayant une viscosité Brookfield se situant dans la plage allant de 0,5 à 10 Pa.s à 25°C.

4. Procédé selon l'une quelconque des revendications 1 à 3, dans lequel les monomères devant être polymérisés sont choisis parmi les esters d'alkyle en C₁₋₄ de l'acide (méth)acrylique.

5. Procédé selon l'une quelconque des revendications 1 à 4, dans lequel les monomères devant être polymérisés comprennent le méthacrylate de méthyle.

6. Procédé selon l'une quelconque des revendications 1 à 5, dans lequel les composés de la formule générale (I) sont choisis parmi les sels de sodium de l'acide 2-(méth)acrylamido-2-méthylpropane sulfonique, de l'acide 2-acrylamidopropane sulfonique et de l'acide 2-acrylamido-2-éthane-sulfonique.

7. Procédé selon l'une quelconque des revendications 1 à 6, dans lequel les monomères acryliques devant être copolymérisés avec les composés de la formule générale (I) sont choisis parmi le (méth)acrylamide, le sels de métaux alcalins et alcalino-terreux de l'acide (méth)acrylique, les esters d'alkyle en C₁-C₄ de l'acide (méth)acrylique et le (méth)acrylonitrile.

8. Procédé selon l'une quelconque des revendications 1 à 7, dans lequel les monomères devant être polymérisés sont employés en combinaison avec une quantité allant jusqu'à 50% en poids, sur la base du mélange des monomères, d'autres monomères copolymérisables, mono- et/ou polyinsaturés.

9. Utilisation d'un polymère obtenu par polymérisation de :
(a) 60 à 100% en poids, de préférence 70 à 90% en poids, d'au moins un monomère de la formule (I) donnée à la revendication 1 ; et
(b) 0 à 40% en poids, de préférence 10 à 30% en poids, d'au moins un monomère acrylique ;
en tant que stabilisant pour la polymérisation en suspension aqueuse d'homo- et copolymères d'esters d'alkyle en C₁₋₈ de l'acide (méth)acrylique, à la condition qu'il ne soit pas utilisé en combinaison avec un électrolyte ayant un cation monovalent.
